Europäisches Patentamt

European Patent Office

Office européen des brevets

(19)

(11) **EP 0 429 343 B1**

(12)

# EUROPEAN PATENT SPECIFICATION

(45) Date of publication and mention
of the grant of the patent:
**15.01.1997 Bulletin 1997/03**

(51) Int Cl.6: **G11B 11/10**

(21) Application number: **90403238.0**

(22) Date of filing: **15.11.1990**

(54) **A recording apparatus using magneto-optical effect**

Aufzeichnungsgerät gebrauchmachend von magnetooptischem Effekt

Appareil d'enregistrement utilisant l'effet magnéto-optique

(84) Designated Contracting States:
**DE FR GB**

(30) Priority: **21.11.1989 JP 302369/89**

(43) Date of publication of application:
**29.05.1991 Bulletin 1991/22**

(73) Proprietor: **SONY CORPORATION**
**Tokyo (JP)**

(72) Inventors:
• **Watanabe, Tetsu**
**Shinagawa-ku, Tokyo (JP)**
• **Yamagami, Tamotsu**
**Shinagawa-ku, Tokyo (JP)**
• **Fujita, Goro**
**Shinagawa-ku, Tokyo (JP)**

(74) Representative: **Thévenet, Jean-Bruno et al**
**Cabinet Beau de Loménie**
**158, rue de l'Université**
**75340 Paris Cédex 07 (FR)**

(56) References cited:
**EP-A- 0 275 323          EP-A- 0 321 027**
**DE-A- 3 727 681**

• **Mini-Micro Systems USA, vol.21, No.4, April**
**1988, Kerwin G.J., "Window Margin Testing:**
**Panacea or Problem?", pages 47,48,50,55**

EP 0 429 343 B1

## Description

### BACKGROUND OF THE INVENTION

#### Field of the Invention

The present invention relates to a recording apparatus using magneto-optical effect for recording an information signal onto a magneto-optical disc and, more particularly, to a magneto-optical recording apparatus using a magnetic field modulating method.

#### Description of the Prior Art

In a magneto-optical disc recording/reproducing apparatus using the magnetic field modulating method, a laser beam is irradiated onto a recording surface of a magneto-optical disc, a magnetic field which was modulated by recording data is applied to the magneto-optical disc, and data is recorded. According to such a magnetic field modulating method, what is called an overwrite in which new data is written without erasing the past data can be performed.

As a magneto-optical disc recording/reproducing apparatus using the magnetic field modulating method, there has been proposed an apparatus of the continuous irradiating type in which a magnetic field which was modulated by recording data is applied to the magneto-optical disc while irradiating a predetermined laser beam onto the magneto-optical disc. However, in such a magneto-optical disc recording/reproducing apparatus using the magnetic field modulating method of the continuous irradiating type, it is difficult to form a magnetization pattern whose orientation is suddenly reversed between adjacent pits.

That is, in the magneto-optical disc, a perpendicular magnetizing film is heated until a Curie temperature Tc or higher for the irradiating time of the laser beam. When an external magnetic field is applied and the perpendicular magnetizing film is cooled to a Curie temperature Tc or less, the orientation of the magnetic field of the perpendicular magnetizing film is decided. Therefore, in order to form a magnetization pattern whose orientation is suddenly reversed between the adjacent pits, the external magnetic field needs to be maintained to a saturation level or higher until the perpendicular magnetizing film is cooled to the Curie temperature Tc or less.

In the magneto-optical disc recording/reproducing apparatus using the magnetic field modulating method of the continuous irradiating type, the disc is rotated until the portion formed with a pit is deviated from a beam spot, and thereafer, the pit is cooled. Therefore, the external magnetic field corresponding to the portion between code data is applied before the perpendicular magnetizing film of the portion of the pit formed is cooled to the Curie temperature Tc or less and the orientation of the magnetic field of the perpendicular magnetizing film is decided. Accordingly, if the recording data has been reversed, a portion in which the magnetization orientation is not decided is apt to occur between adjacent pits.

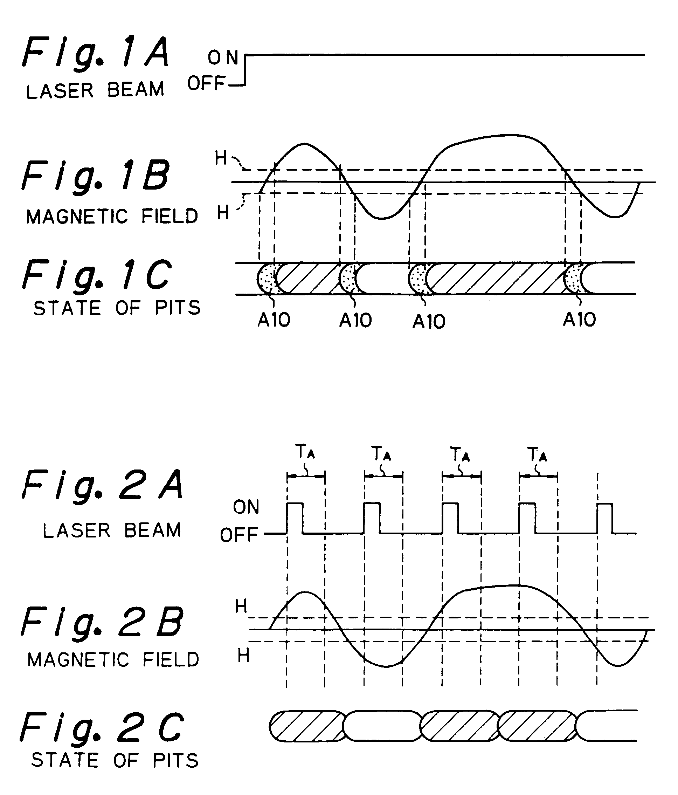

That is, in the magneto-optical disc recording/reproducing apparatus using the magnetic field modulating method of the continuous irradiating type, as shown in Fig. 1A, a predetermined laser beam is irradiated onto the magneto-optical disc. As shown in Fig. 1B, the magnetic field which was modulated by recording data is applied to the magneto-optical disc. H indicates a magnetic saturation level.

When the laser beam is continuously irradiated as mentioned above, the external magnetic field at change point of data is applied before the perpendicular magnetizing film is cooled to the Curie temperature Tc or less. Therefore, as shown in Fig. 1C, a portion A10 whose orientation is not decided occurs between adjacent pits.

Therefore, there has been proposed a magnetooptical disc recording/reproducing apparatus using the magnetic field modulating method of the pulse irradiating type in which a laser beam is intermittently irradiated onto a magneto-optical disc at timings based on predetermined reference clocks and a magnetic field which was modulated by recording data is applied synchronously with the laser beam irradiation (International Publication No. W089/12889). In such a magneto-optical disc recording/reproducing apparatus using the magnetic field modulating method of the pulse irradiating type, since the laser beam is intermittently irradiated, the external magnetic field can be set to the saturation level or higher until the perpendicular magnetizing film is cooled to the Curie temperature Tc or less and the orientation of the magnetization of the perpendicular magnetizing film is decided. Thus, a magnetization pattern whose orientation is suddenly reversed between adjacent pits can be formed.

That is, in the magneto-optical disc recording/reproducing apparatus using the magnetic field modulating method of the pulse irradiating type, as shown in Fig. 2A, the laser beam is intermittently irradiated. As shown in Fig. 2B, the magnetic field which was modulated by recording data is applied to the magneto-optical disc.

In this case, the orientation of the magnetization of the perpendicular magnetizing film is decided by the external magnetic field which is applied for a period of time $T_A$ until the temperature of the perpendicular magnetizing film is reduced to the Curie temperature Tc or less after the laser beam was irradiated onto the magneto-optical disc. After the temperature of the perpendicular magnetizing film was cooled to the Curie temperature Tc or less, the orientation of the magnetization of the perpendicular magnetizing film of the magneto-optical disc does not change.

As shown in Fig. 2B, in the magneto-optical disc recording/reproducing apparatus using the magnetic field modulating method of the pulse irradiating type, an external magnetic field of a saturation level H or higher is applied for a period of time $T_A$. Therefore, as shown in Fig. 2C, a magnetization pattern whose orientation is suddenly reversed between adjacent pits can be formed.

On the other hand, in the above conventional magneto-optical disc recording/reproducing apparatus using the magnetic field modulating method of the pulse irradiating type, the minimum number of drive pulses which are needed to form pits of one channel bit is determined by the modulating method. That is, the minimum number of pulses which are needed to form the pits of one channel bit is determined by a ratio N of a minimum length between transition Tmin of the modulating method to a detection window period Tw.

For instance, in the case of using NRZI (Non Return to Zero Inverted) in which the minimum length between transition Tmin is (Tmin = T) and the detection window period Tw is (Tw = T) (T denotes a channel byte interval), the minimum number of drive pulses which are needed to form the pits of one channel bit is 1. On the other hand, in the case of using the 2-7 modulation in which the minimum length between transitions Tmin is (Tmin = 1.5T) and the detection window period Tw is (Tw = 0.5T), for instance, the minimum number of drive pulses which are needed to form the pits of one channel bit is 3.

Therefore, even if the recording densities are the same, when the modulating method changes, the interval of necessary drive pulses changes. That is, in the case of using the 2-7 modulation as a modulating method, the interval of drive pulses needs to be 1/2 as compared with the case of using the NRZI.

In the above magneto-optical disc recording/reproducing apparatus using the magnetic field modulating method of the pulse irradiating type, if the interval of drive pulses is reduced by a predetermined interval which is determined by the thermal response speed of the magneto-optical disc or longer, the laser beam is irradiated by the next drive pulse before the perpendicular magnetizing film is cooled to the Curie temperature Tc or less and the orientation of the magnetization is decided. Accordingly, in the above conventional magneto-optical disc recording/reproducing apparatus using the magnetic field modulating method of the pulse irradiating type, when the modulating method is changed from the NRZI to the 2-7 modulation and the interval of drive pulses becomes short, there occurs a problem such that a magnetization pattern whose orientation is suddenly reversed between adjacent pits cannot be formed.

EP-A-0 275 323 describes magneto-optical recording apparatus in which light beam driving signals are gated in dependence upon the magnitude of the magnetic field to be applied to the magneto-optical disc. When the magnetic field is changing from one polarity to the other the drive signals are not permitted to activate the light beam. The preamble of claim 1 is based on this document.

There is also considered a method whereby the thermal response speed of the magneto-optical disc is improved to thereby make it possible to form a magnetization pattern whose orientation is suddenly reversed between adjacent pits even in the case of the 2-7 modulation. However, there is limitation in the improvement of the thermal response speed of the magneto-optical disc.

## OBJECTS AND SUMMARY OF THE INVENTION

It is, therefore, an object of the present invention to provide a recording apparatus using magneto-optical effect in which a magnetization pattern whose orientation is suddenly reversed between adjacent pits can be formed irrespective of a modulating method.

According to the invention, there is provided a magneto-optical recording apparatus in which a light beam is irradiated onto a magneto-optical disc for forming pits therein and a magnetic field modulated by code data according to a predetermined modulation method is applied to the magneto-optical disc, comprising:

light beam driving means for generating drive pulses to cause intermittent irradiation of said light beam at a frequency based upon a reference clock signal; and
control means for stopping generation of the light beam, at times corresponding to transition points in the modulated magnetic field, by selective suppression of drive pulses;

characterised in that
the control means is adapted selectively to suppress drive pulses depending upon the type of modulation method applied to the magnetic field such that drive pulses will be suppressed at times corresponding to transition points in the modulated magnetic field in the case where a ratio N of the minimum length between transitions Tmin to the detection window length Tw (N=Tmin/Tw) according to said predetermined modulation method is larger than 1, and is adapted to select a number of drive pulses for suppression for producing an interval between drive pulses, at each transition point in the modulated magnetic field, such that the pit formed by the last unsuppressed drive pulse before the transition point has time to cool to below the Curie temperature before the transition of the magnetic field, the selection being based upon the modulated data rate, the temperature and the thermal characteristics of the magneto-optical disc.

As a modulating method when recording data is modulated, in the case of using a modulating method in which the ratio N of the minimum length between transition Tmin to the detection window period Tw (N = Tmin/Tw) is larger than 1, the laser drive pulses at the positions corresponding to the change points are thinned out by a drive pulse generating circuit. Therefore, even if the modulating method is changed a magnetization pattern whose orientation is suddenly reversed between adjacent pits can be formed.

If the laser drive pulses are formed by increasing reference clocks by m times, the thinning-out resolution of the drive pulses at the positions corresponding to the change points of data can be improved and a pulse interval according to the temperature characteristics and thermal characteristics of a magneto-optical disc can be set.

BRIEF DESCRIPTION OF THE DRAWINGS

Figs. 1 and 2 are timing charts which are used for explaining conventional magneto-optical disc recording apparatuses using magnetic field modulating methods;

Fig. 3 is a block diagram of an embodiment of the present invention;

Figs. 4 and 5 are timing charts which are used to explain an embodiment of the invention; and

Fig. 6 is a block diagram of another embodiment of the invention.

The above, and other, objects, features and advantages of the present invention will become readily apparent from the following detailed description thereof which is to be read in connection with the accompanying drawings.

DETAILED DESCRIPTION OF THE PREFERRED EMBODIMENTS

An embodiment of the present invention will be described hereinbelow with reference to the drawings.

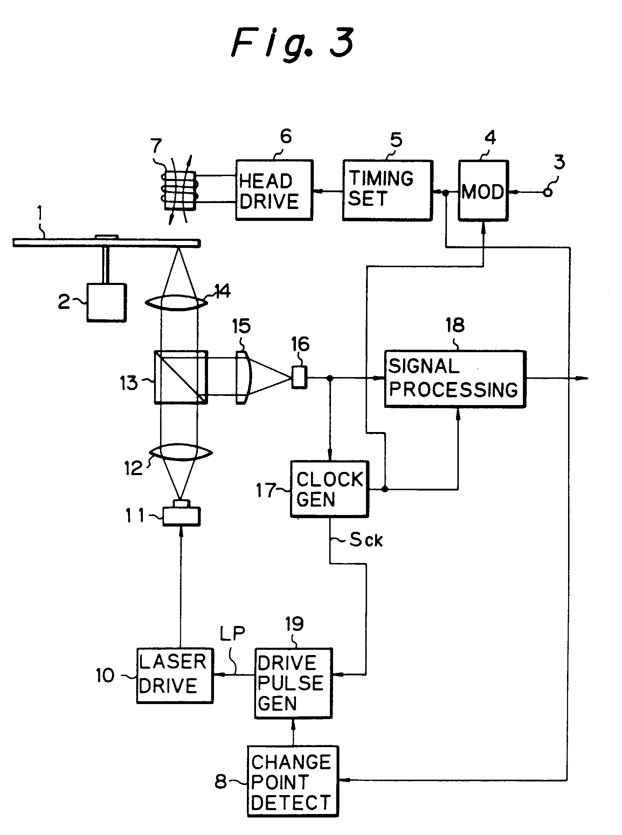

Fig. 3 shows an embodiment of the invention. In Fig. 3, a magneto-optical disc 1 is rotated at a predetermined rotational speed by a spindle motor 2.

Servo patterns are previously formed in servo areas which are arranged at predetermined angular intervals on the magneto-optical disc 1. Reference clocks $S_{ck}$ can be obtained on the basis of reproduction signals which are derived from the servo patterns.

Recording data is supplied to a data input terminal 3. The recording data is supplied to modulating circuit 4. The data from the input terminal 3 is modulated by the modulating circuit 4 in accordance with a predetermined modulating method. The 2-7 modulation, NRZI, or the like can be used as a modulating method.

An output of the modulating circuit 4 is supplied to magnetic head 7 through a timing setting circuit 5 and a head driving circuit 6 and is also supplied to a change point detecting circuit 8. The change point detecting circuit 8 detects a change point at which the output of the modulating circuit 4 changes from the low level to the high level and vice versa. An output of the change point detecting circuit 8 is supplied to a drive pulse generating circuit 19.

The timing setting circuit 5 sets the timing of code data which is output from the modulating circuit 4 and the timing for irradiation of a laser beam emitted from a laser diode 11 in accordance with the temperature characteristics and the thermal characteristics of the magneto-optical disc 1.

The magnetic head 7 is arranged so as to face the magneto-optical disc 1. The output of the modulating circuit 4 which was transmitted through the timing setting circuit 5 and the head driving circuit 6 is supplied to the magnetic head 7. A modulation magnetic field based on the output of the modulating circuit 4 is generated from the magnetic head 7. The modulation magnetic field is applied to the magneto-optical disc 1.

Laser drive pulses LP are supplied to the laser diode 11 via a laser driving circuit 10. A laser beam is intermittently output from the laser diode 11 by the laser drive pulses LP.

The laser beam which is emitted from the laser diode 11 is converted into the parallel beam through a collimating lens 12 and is converged onto the magneto-optical disc 1 through a deflecting beam splitter 13 and an objective lens 14. The reflected light of the magneto-optical disc 1 is received by a photo diode 16 through the objective lens 14, the deflecting beam splitter 13, and a condenser lens 15.

An output of the photo diode 16 is supplied to a clock generating circuit 17 and to a signal processing circuit 18.

As mentioned above, servo patterns have previously been formed in servo areas which are arranged at predetermined angular intervals on the magneto-optical disc 1. The reference clocks $S_{ck}$ are formed by the clock generating circuit 17 from reproduction signals which are derived from the servo patterns of the servo areas on the magneto-optical disc 1. The reference clocks $S_{ck}$ are supplied to the modulating circuit 4 and the signal processing circuit 18 and are also supplied to the drive pulse generating circuit 19.

The drive pulse generating circuit 19 forms the laser drive pulses LP on the basis of the reference clocks $S_{ck}$. On the other hand, in the case where a modulating method in which the ratio N of the minimum length between transition Tmin to the detection window period Tw ($N = Tmin/Tw$) is larger than 1 is used when the recording data is modulated by the modulating circuit 4, the drive pulse generating circuit 19 thins out the laser drive pulses LP at the positions corresponding to the change points.

That is, in the NRZI, the ratio N of the minimum length between transition Tmin to the detection window period Tw is as follows.

$$N = Tmin/Tw$$
$$= 1T/1T = 1$$

As mentioned above, in the case of the modulating method in which the ratio N of the minimum length between transition Tmin to the detection window period Tw is equal to 1, the laser drive pulses Lp are not thinned out.

In the 2-7 modulation, the ratio N of the minimum length between transition Tmin to the detection window period Tw is as follows.

$$N = Tmin/Tw$$

$$= 1.5T/0.5T = 3$$

On the other hand, in the 1-7 modulation, the ratio N of the minimum length between transition Tmin to the detection window period Tw is as follows.

$$N = Tmin/Tw$$

$$= 1.33T/0.67T$$

$$= 2$$

As mentioned above, in the case of the modulating method in which the ratio N of the minimum length between transition Tmin to the detection window period Tw is larger than 1, the laser drive pulses LP at the positions corresponding to the change points are thinned out by n pulses (N > n).

The laser drive pulses LP from the drive pulse generating circuit 19 are supplied to the laser diode 11 through the laser driving circuit 10. The laser diode 11 intermittently emits a laser beam in response to the laser drive pulses LP.

As mentioned above, the laser beam from the laser diode 11 is converged onto the magneto-optical disc 1 through the collimating lens 12, deflecting beam splitter 13, and objective lens 14.

When the laser beam is converged onto the magneto-optical disc 1, a temperature of this portion rises. When the temperature of the perpendicular magnetizing film of the magneto-optical disc 1 is raised to the Curie temperature Tc or higher, the coercive force of the perpendicular magnetizing film suddenly decreases. Therefore, the magnetizing direction of the perpendicular magnetizing film of the magneto-optical disc 1 is oriented by the magnetic field from the magnetic head 7. As mentioned above, data is recorded to the magneto-optical disc 1.

According to an embodiment of the invention, in the case where the modulating method in which the ratio N of the minimum length between transition Tmin to the detection window period Tw (N = Tmin/Tw) is larger than 1 is used when recording data is modulated by the modulating circuit 4 as mentioned above, the laser drive pulses LP at the positions corresponding to the change points are thinned out by the drive pulse generating circuit 19. Therefore, even in the case where the modulating method in which the minimum number of pulses which are needed to form pits corresponding to one channel bit is large is used, a magnetization pattern whose orientation is suddenly reversed between adjacent pits can be formed.

The above point will now be described hereinbelow.

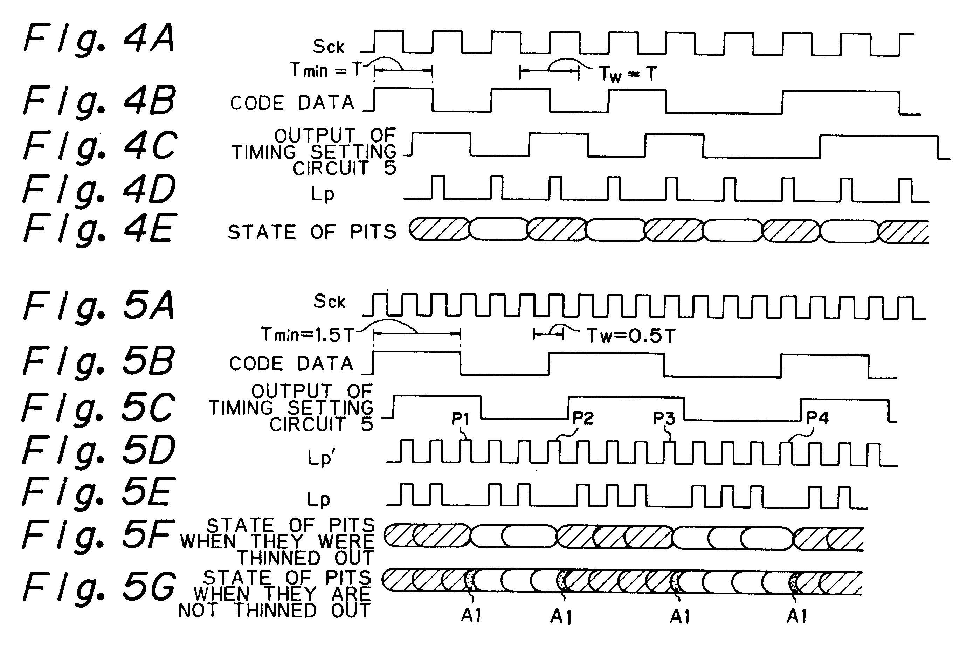

Fig. 4A shows the reference clocks $S_{CK}$ in the case of using NRZI as a modulating method. Fig. 4B shows code data which is output from the modulating circuit 4 in the case of using NRZI as a modulating method.

In the NRZI, assuming that a channel bit interval is set to T, the minimum length between transition Tmin is set to (Tmin = T) and the detection window period Tw is set to (Tw = T). Therefore, the ratio N of the minimum length between transition Tmin and the detection window period Tw is equal to 1. In this case, the pulses are not thinned out by the drive pulse generating circuit 19.

In the drive pulse generating circuit 19, laser drive pulses LP as shown in Fig. 4D are formed on the basis of the reference clocks $S_{CK}$. As shown in Fig. 4C, the code data from the modulating circuit 4 is delayed by the timing setting circuit 5 at a timing according to the temperature characteristics and the thermal characteristics of the magneto-optical disc 1.

The laser beam from the laser diode 11 is irradiated onto the magneto-optical disc 1 for a period of time when the laser drive pulses LP shown in Fig. 4D are generated from the drive pulse generating circuit 19. The code data as shown in Fig. 4C is supplied to the magnetic head 7. The magnetic field based on the code data is applied from the magnetic head 7 to the magneto-optical disc 1. Thus, pits as shown in Fig, 4E are formed on the magneto-optical disc 1.

In this case, if the interval of the laser drive pulses LP is longer than a predetermined period of time which is determined by the thermal response speed of the magneto-optical disc 1, the external magnetic field of the saturation level or high is applied for a period of time after the laser beam was irradiated onto the magneto-optical disc 2 until the perpendicular magnetizing film is cooled to the Curie temperature Tc. Therefore, as shown in Fig. 4E, even in the case where the data has been inverted, a magnetization pattern whose orientation is suddenly reversed between adjacent pits can be formed.

Fig. 5A shows the reference clocks $S_{CK}$ in the case of using 2-7 modulation as a modulating method. Fig. 5B shows the code data which is output from the modulating circuit 4 in the case of using 2-7 modulation as a modulating method.

In the 2-7 modulation, assuming that the channel bit interval is set to T, the minimum length between transition Tmin is set to 1.5T and the detection window period Tw is set to 0.5T. Thus, the ratio N of the minimum length between transition Tmin to the detection window period Tw is equal to 3. In this case, as mentioned above, the laser drive pulses LP which are generated from the drive pulse generating circuit 19 are thinned out at the positions corresponding to the change points of the data.

That is, laser drive pulses LP' as shown in Fig. 5D are formed on the basis of the reference clocks $SC_K$ shown in Fig. 5A. The laser drive pulses LP' are thinned out one pulse by one at the positions corresponding to the change points of the data as shown in Fig. 5E. That is, the pulses P1, P2, P3, P4, ... in Fig. 5D are thinned out.

The code data from the modulating circuit 4 is delayed by the timing setting circuit 5 at the timing according to the temperature characteristics and thermal characteristics of the magneto-optical disc as shown in Fig. 5C.

The laser beam is emitted by the laser diode 11 for a period of time when the laser drive pulses LP shown in Fig. 5E are generated from the drive pulse generating circuit 19. The code data as shown in Fig. 5C is supplied to the magnetic head 7. The magnetic field based on the code data is applied from the magnetic head 7 to the magneto-optical disc 1.

Thus, pits as shown in Fig. 5F are formed on the magneto-optical disc 1. In this case, if the recording density is similar to that when the data was modulated by the NRZI, as shown in Fig. 5F, even in the case where the data has been inverted, a magnetization pattern whose orientation is suddenly reversed between adjacent pits can be formed.

That is, by thinning out the laser drive pulses LP at the positions corresponding to the change points of the data, the interval of the laser drive pulses LP is extended as shown in Fig. 5E with respect to the case where the data is inverted. The interval of the laser drive pulses LP at this time is equal to the interval of the laser drive pulses LP in the case of recording the data by the NRZI. Therefore, if the recording density is similar to that when the data was modulated by the NRZI, a magnetization pattern whose orientation is suddenly reversed between adjacent pits can be formed.

If the data is recorded by the 2-7 modulation, assuming that the thinning-out operation of the drive pulses at the positions corresponding to the change points of the data as mentioned above is not executed, a magnetization pattern whose orientation is suddenly reversed between adjacent pits as mentioned above cannot be formed.

That is, it is now assumed that the laser drive pulses LP' when the thinning-out operation at the change points is not executed as shown in Fig. 5D were supplied to the laser diode 11 and the data was recorded. In this case, the interval of the drive pulses is equal to 1/2 of that in the case where the data was recorded by the NRZI. Therefore, before the temperature of the pits formed is reduced to the Curie temperature Tc or less, the next drive pulse is given. Thus, as shown in Fig. 5G, a period of time A1 when the magnetization orientation is not decoded between pits occurs.

The number of laser pulses at the change points which are thinned out is set in accordance with the rate of the recording data and the temperature characteristics and thermal characteristics of the magneto-optical disc 1.

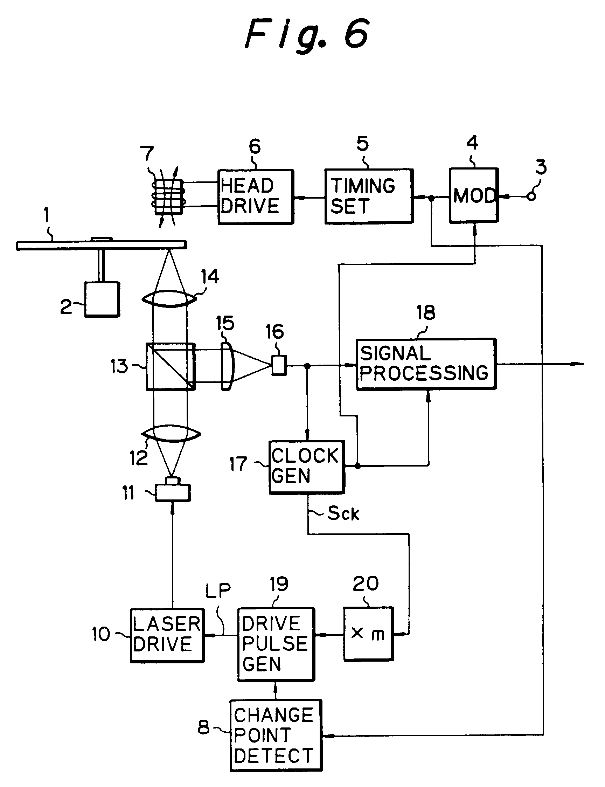

Fig. 6 shows another embodiment of the invention. In the embodiment, there is provided a multiplying circuit 20 for increasing the reference clocks $S_{CK}$ which are generated from the clock generating circuit 17 by m times (m is an integer). The reference clocks $mS_{CK}$ which were increased by m times are supplied to the drive pulse generating circuit 19.

By increasing the reference clocks $S_{CK}$ by m times as mentioned above, the thinning-out resolution of the drive pulses at the positions corresponding to the change points of the data can be improved.

That is, it is assumed that, for instance, the 2-7 modulation in which the ratio N of the minimum length between transition Tmin to the detection window period Tw is equal to (N = 3) is used. In the case of such a modulating method, if the laser drive pulses LP are formed by the reference clocks $S_{CK}$, the number of laser drive pulses LP which are needed to form the pits corresponding to the channel bit (1.5T) is equal to 3. Therefore, there are considered two kinds of thinning-out methods whereby one of the three pulses is thinned out at the change point and whereby two of the three pulses are thinned out at the change points.

Assuming that the reference clocks $S_{CK}$ are doubled, for instance, the number of laser drive pulses LP which are needed to form the pit of one channel bit (1.5T) is equal to 6. Therefore, as thinning-out methods, the following five kinds of methods are considered: that is, a method whereby one of six pulses is thinned out at the change point; a method whereby two of six pulses are thinned out at the change points; a method whereby three of six pulses are thinned out at the change points a method whereby four of six pulses are thinned out at the change points; and a method whereby five of six pulses are thinned out at the change points.

Accordingly, the pulse interval of the laser drive pulses LP at the change points can be set to the optimum interval according to the temperature characteristics and thermal characteristics of the magneto-optical disc 1.

According to the invention, in the case where the modulating method in which the ratio N of the minimum length between transition Tmin to the detection window period margin Tw (N = Tmin/Tw) is larger than 1 is used as modulating method when recording data is modulated, the laser drive pulses LP at the positions corresponding to the change points are thinned out by the drive pulse generating circuit 19. Therefore, even if the modulating method is changed, a magnetization pattern whose orientation is suddenly reversed between adjacent pits can be formed.

On the other hand, according to the invention, the laser drive pulses LP are formed by increasing the reference clocks $S_{CK}$ by m times. Therefore, the thinning-out resolution of the drive pulses at the positions corresponding to the change points of the data can be improved. The pulse interval according to the temperature characteristics and thermal characteristics of the magneto-optical disc 1 can be set.

**Claims**

1. Magneto-optical recording apparatus, in which a light beam is irradiated onto a magneto-optical disc for forming pits therein and a magnetic field modulated by code data according to a predetermined modulation method is applied to the magneto-optical disc, comprising:

   light beam driving means (19) for generating drive pulses to cause intermittent irradiation of said light beam at a frequency based upon a reference clock signal (Sck); and
   control means (8) for stopping generation of the light beam, at times corresponding to transition points in the modulated magnetic field, by selective suppression of drive pulses;

   characterised in that
   the control means (8) is adapted selectively to suppress drive pulses depending upon the type of modulation method applied to the magnetic field such that drive pulses will be suppressed at times corresponding to transition points in the modulated magnetic field in the case where a ratio N of the minimum length between transitions Tmin to the detection window length Tw (N=Tmin/Tw) according to said predetermined modulation method is larger than 1, and is adapted to select a number of drive pulses for suppression for producing an interval between drive pulses, at each transition point in the modulated magnetic field, such that the pit formed by the last unsuppressed drive pulse before the transition point has time to cool to below the Curie temperature before the transition of the magnetic field, the selection being based upon the modulated data rate, the temperature and the thermal characteristics of the magneto-optical disc.

2. Magneto-optical recording apparatus according to claim 1, wherein the reference clock signals occur at a frequency of 1/Tw; and the light beam driving means (19) is adapted to output drive pulses at a frequency (mSck) which is an integer multiple (m) of the reference clock signal frequency.

3. Magneto-optical recording apparatus according to claim 1, wherein 2-7 modulation is used as said predetermined modulation method.

4. Magneto-optical recording apparatus according to claim 1, wherein said control means has transition detecting means (8) for detecting transitions in the modulating coded data and the drive pulse generation means (19) is adapted for selectively suppressing drive pulses responsive to the output of the transition detecting means (8).

**Patentansprüche**

1. Magnetooptische Aufzeichnungsvorrichtung, bei der ein Lichtstrahl auf eine magnetooptische Platte zur Bildung von Pits auf dieser eingestrahlt wird und ein Magnetfeld, das durch Code-Daten gemäß einem festgelegten Modulationsverfahren moduliert ist, auf die magnetooptische Platte angewandt wird, aufweisend:

   eine Lichtstrahl-Ansteuereinrichtung (19) zur Erzeugung von Ansteuerpulsen, so daß eine intermittierende Bestrahlung des Lichtstrahles mit einer auf einem Referenztaktsignal (Sck) basierenden Frequenz hervorgerufen wird; und

   eine Steuereinrichtung (8) zur Beendigung der Erzeugung des Lichtstrahles zu Zeitpunkten entsprechend den Übergangspunkten des modulierten Magnetfeldes durch selektive Unterdrückung von Ansteuerpulsen; **dadurch gekennzeichnet**, daß

   die Steuereinrichtung (8) ausgebildet ist, selektiv Ansteuerpulse in Abhängigkeit des Typs des auf das Magnetfeld angewandten Modulationsverfahrens derart unterdrückt, daß die Ansteuerpulse zu Zeitpunkten unterdrückt werden entsprechend den Übergangspunkten in dem modulierten Magnetfeld in dem Fall, wenn das Verhältnis N der minimalen Länge zwischen Übergängen Tmin zu der Erfassungsfensterlänge Tw (N=Tmin/Tw) gemäß dem festgelegten Modulationsverfahren größer als 1 ist, und ausgebildet ist, eine Anzahl von Ansteuerpulsen zur Unterdrückung auszuwählen, um ein Intervall zwischen Ansteuerpulsen an jedem Übergangspunkt in dem modulierten Magnetfeld derart zu erzeugen, daß das durch den letzten nicht unterdrückten Ansteuerpuls vor dem Übergangspunkt ausgebildete Pit Zeit zur Abkühlung unter die Curie-Temperatur vor dem Übergang des Magnetfeldes hat, wobei die Auswahl auf der Modulationsdatenrate, der Temperatur und der thermischen Charakteristik der magnetooptischen Platte basiert.

2. Magnetooptische Aufzeichnungsvorrichtung gemäß Anspruch 1,
   wobei die Referenztaktsignale mit einer Frequenz 1/Tw auftreten und die Lichtstrahlansteuereinrichtung (19) ausgebildet ist, Ansteuerpulse mit einer Frequenz (mSck) auszugeben, die ein ganzzahliges Vielfaches (m) der Referenztaktsignalfrequenz ist.

3. Magnetooptische Aufzeichnungsvorrichtung gemäß Anspruch 1,
wobei eine 2-7-Modulation als das festgelegte Modulationsverfahren verwendet wird.

4. Magnetooptische Aufzeichnungsvorrichtung gemäß Anspruch 1,
wobei die Steuereinrichtung eine Übergangs-Erfassungseinrichtung (8) zur Erfassung von Übergängen in den modulierten codierten Daten aufweist und die Ansteuerpuls-Erzeugungseinrichtung (19) ausgebildet ist, selektiv Ansteuerpulse in Abhängigkeit von dem Ausgang der Übergangs-Erfassungseinrichtung (8) zu unterdrücken.

**Revendications**

1. Appareil d'enregistrement magnéto-optique dans lequel un faisceau lumineux est irradié sur un disque magnéto-optique pour former des cratères dessus et un champ magnétique modulé par des données de code conformément à un procédé de modulation prédéterminé est appliqué sur le disque magnéto-optique, comprenant :

un moyen d'excitation de faisceau lumineux (19) pour générer des impulsions d'excitation pour provoquer une irradiation intermittente dudit faisceau lumineux à une fréquence basée sur un signal d'horloge de référence (Sck) ; et

un moyen de commande (8) pour arrêter la génération du faisceau lumineux à des instants correspondant à des points de transition dans le champ magnétique modulé, au moyen d'une suppression sélective d'impulsions d'excitation,

caractérisé en ce que :
le moyen de commande (8) est adapté pour supprimer sélectivement des impulsions d'excitation en fonction du type de procédé de modulation appliqué au champ magnétique de telle sorte que des impulsions d'excitation soient supprimées à des instants correspondant à des points de transition dans le champ magnétique modulé dans le cas où un rapport N de la longueur minimum entre des transitions Tmin sur la longueur de fenêtre de détection Tw (N = Tmin/Tw) conformément audit procédé de modulation prédéterminé est supérieur à 1, et est adapté pour sélectionner un certain nombre d'impulsions d'excitation pour la suppression pour produire un intervalle entre les impulsions d'excitation, à chaque point de transition dans le champ magnétique modulé, de telle sorte que le cratère formé par la dernière impulsion d'excitation non supprimée avant le point de transition ait le temps de se refroidir jusqu'au-dessous de la température de Curie avant la transition du champ magnétique, la sélection étant basée sur le débit de données modulées, la température et les caractéristiques thermiques du disque magnéto-optique.

2. Appareil d'enregistrement magnéto-optique selon la revendication 1, dans lequel les signaux d'horloge de référence se produisent à une fréquence de 1/Tw ; et le moyen d'excitation de faisceau lumineux (19) est adapté pour émettre en sortie des impulsions d'excitation à une fréquence (mSck) qui est un multiple entier (m) de la fréquence du signal d'horloge de référence.

3. Appareil d'enregistrement magnéto-optique selon la revendication 1, dans lequel une modulation 2-7 est utilisée en tant que dit procédé de modulation prédéterminé.

4. Appareil d'enregistrement magnéto-optique selon la revendication 1, dans lequel ledit moyen de commande comporte un moyen de détection de transition (8) pour détecter des transitions dans les données codées de modulation et le moyen de génération d'impulsion d'excitation (19) est adapté pour supprimer sélectivement des impulsions d'excitation en réponse à la sortie du moyen de détection de transition (8).

*Fig. 1A*
LASER BEAM ON OFF

*Fig. 1B*
MAGNETIC FIELD H H

*Fig. 1C*
STATE OF PITS A10 A10 A10 A10

*Fig. 2A*
LASER BEAM ON OFF

$T_A$ $T_A$ $T_A$ $T_A$

*Fig. 2B*
MAGNETIC FIELD H H

*Fig. 2C*
STATE OF PITS

# Fig. 3

Fig. 4A  Sck

Tmin = T    Tw = T

Fig. 4B  CODE DATA

Fig. 4C  OUTPUT OF TIMING SETTING CIRCUIT 5

Fig. 4D  Lp

Fig. 4E  STATE OF PITS

Fig. 5A  Sck

Tmin=1.5T    Tw=0.5T

Fig. 5B  CODE DATA

Fig. 5C  OUTPUT OF TIMING SETTING CIRCUIT 5

P1    P2    P3    P4

Fig. 5D  Lp'

Fig. 5E  Lp

Fig. 5F  STATE OF PITS WHEN THEY WERE THINNED OUT

Fig. 5G  STATE OF PITS WHEN THEY ARE NOT THINNED OUT

A1    A1    A1    A1

EP 0 429 343 B1

# Fig. 6